# EUROPÄISCHE PATENTSCHRIFT

(11) **EP 0 764 125 B1**
(45) Veröffentlichungstag und Bekanntmachung des Hinweises auf die Patenterteilung: **22.04.1998**
(21) Anmeldenummer: 95923310.7
(22) Anmeldetag: 12.06.1995
(51) Int. Cl.: B65D 90/00, B65D 71/00, B60P 7/12

(54) **VORRICHTUNG UND VERFAHREN ZUM TRANSPORT VON GEFAHRGUTBEHÄLTERN IN CONTAINERN**
DEVICE AND METHOD FOR TRANSPORTING DANGEROUS GOODS CONTAINERS IN TRANSPORT CONTAINERS
DISPOSITIF ET PROCEDE DESTINES AU TRANSPORT EN CONTENEURS DE RECIPIENTS CONTENANT DES MATIERES DANGEREUSES

(30) Priorität: 13.06.1994 DE 4422004
(43) Veröffentlichungstag der Anmeldung: 26.03.1997
(73) Patentinhaber: Timpert, Friedhelm Hermann, 21335 Lüneburg (DE)
(72) Erfinder: Timpert, Friedhelm Hermann, 21335 Lüneburg (DE)
(74) Vertreter: UEXKÜLL & STOLBERG
(86) Internationale Anmeldenummer: EP9502266
(87) Internationale Veröffentlichungsnummer: WO9534490

(56) Entgegenhaltungen:
- WO-A-84/00528
- WO-A-85/01714
- DE-A- 4 223 174
- US-A- 3 375 919

## Beschreibung

Die Erfindung betrifft eine Transportvorrichtung für Gerfahrgutbehälter, mit einem die Gerfahrgutbehälter aufnehmenden ISO-Container und Mitteln zur Ladungssicherung der Gerfahrgutbehälter innerhalb des Containers, sowie ein Verfahren zur Ladungssicherung von Gefahrgutbehältern in ISO-Containern zum Transport.

US-A-3 375 919 beschreibt eine Transportvorrichtung für Garnrollen in einem Karton. Diese Transportvorrichtung weist eine erste Aufnahmefläche auf, die als einstückiges Teil die Bodenfläche des Kartons vollständig auffüllt und so geformt ist, daß eine Mehrzahl von Garnrollen paßgenau in regelmäßiger Anordnung aufgesetzt werden können. Auf aie eingesetzten Garnrollen wird eine zweite, entsprechend geformte einstückige Aufnahmefläche umgekehrt aufgesetzt, die jeweils in einen oberen Bereich der Garnrollen eingreift und die Zwischenfläche des Kartons vollständig ausfüllt. Auf die Zwischenfläche ist eine weitere Aufnahmefläche aufgesetzt, auf die eine zweite Lage von Garnrollen aufgestellt wird, in deren obere Bereiche schließlich eine vierte Aufnahmefläche eingreift, die die Deckenfläche des Kartons vollständig ausfüllt. Entsprechende einstückige Aufnahmeflächen für ISO-Container wären nur schwer handhabbar und es würden sich erhebliche Komplikationen beim Beund Entladen von Containern ergeben.

Die Druckschrift WO 85/01714 beschreibt ein Verfahren zur Unterbringung von Fässern einer bestimmten Größe in einem ISO-Container. Es wird vorgeschlagen, zur Unterbringung von Fässern der Größe eines 55 US-Gallonenfasses in einem ISO-Container, daß der Falz am Boden und am Oberboden des Fasses in seiner Gesamtheit derart nach innen gedrückt wird, daß der Außendurchmesser des Falzes vermindert und dem größten Außendurchmesser des Faßmantels angepaßt wird: weiterhin werden die Sicken am äußeren Umfang des Fasses so verändert, daß an der Schmalseite des Containers vier Fässer und über die Länge zehn Reihen von Fässern angeordnet werden können. Eine derartige dichte Einstapelung von Fässern in Containern ist für Gefahrgutbehälter mit den Sicherheitsbestimmungen nicht vereinbar, da bei dichter Anlage der Fässer aneinander bei Beschleunigungen des Containers die Trägheit aller Fässer einer Reihe ungedämpft auf die Containerwand einwirkt, was bei den erforderlichen Beschleunigungsversuchen zur Beschädigung der Containerwände führen würde.

Die Erfindung bezieht sich insbesondere auf den Transport von radioaktiven Abfällen, die in Gefahrgutbehältern wie etwa Stahlfässern eingelagert sind, welche zum Transport in ISO-Container eingstellt werden. Für solche Stoffe gelten besondere Sicherheitsbestimmungen, wie Sie im Gesetz über die Beförderung gefährlicher Güter und der aufgrund dessen erlassenen Gefahrgut-Ausnahmeverordnung festgelegt sind. In der Gefahrgut-Ausnahmeverordnung vom 23.6.1993 ist die Ausnahme Nr. 49 aufgeslistet, die Zulässigkeitsbedingungen für ISO-Container, die zum Transport von LSA- und SCO-Material eingesetzt werden sollen, festsetzt. Unter anderem muß nachgewiesen werden, daß die Container sowie die Verzurrung des Ladegutes zusätzlich zur ISO-Norm erhöhten Belastungen standhalten. Nach der Ausnahme Nr. 49 der Gefahrgutverordnung Binnenschiffahrt, Eisenbahn und Straße dürfen bestimmte radioaktive Stoffe nur dann in Containern transportiert werden, wenn diese einschließlich der Vorrichtungen zur Ladungssicherung bei der der höchstzulässigen Gesamtmasse des Ladegutes und der höchstzulässigen Masse des einzelnen zu verzurrenden Gegenstandes die Kräfte bei folgenden Beschleunigungen aufnehmen können:
- Zweifacher Wert der Erdbeschleunigung in Längsrichtung,
- einfacher Wert der Erdbeschleunigung horizontal seitwärts,
- einfacher Wert der Erdbeschleunigung vertikal aufwärts, und
- zweifacher Wert der Erdbeschleunigung vertikal abwärts.

Dabei muß ein Sicherheitsbeiwert von 1.5 nachgewiesen werden.

Bislang wurden gemäß dem Oberbegriff des Anspruchs 1 bei einer Transportvorrichtung für Gefahrgutbehälter mit radioaktivem Inhalt, wobei typischerweise Stahlfässer verwendet werden, mit Spanngurten als Mitteln zur Ladungssicherung in den Containern verzurrt. Dabei wurden die Spanngurte um mehrere Fässer umlaufend verlegt und in den Seitenwänden des Containers befestigt. Diese Art der Ladungssicherung hat sich in verschiedener Hinsicht als nachteilig erwiesen.

Zwar ist ein einzelner Spanngurt hinsichtlich Zugfestigkeit und Dehnungseigenschaften an sich gut spezifizierbar, dies überträgt sich jedoch nicht ohne weiteres auf eine Vorhersagbarkeit der Belastungsverhältnisse in einer Gruppe von verzurrten Gegenständen, wenn der Spanngurt in komplizierter Weise um diese Gruppe geführt ist.

Insbesondere ist es in der praktischen Handhabung schwierig, Gefahrgutbehälter, wie etwa Stahlfässer, die keine besonderen Führungsmöglichkeiten (z.B. Befestigungsösen oder Laschen) für die Spanngurte haben haben, zuverlässig und in reproduzierbarer Weise nach einem vorgegebenen Verzurrungsplan zu sichern. Ferner kommt es beim Transport der Container zwangsläufig zu Erschütterungen und Bewegungen der Behälter innerhalb des Containers, so daß die Verzurrungsgurte daran verrutschen können und es damit zu drastischen Veränderungen der Belastbarkeit der Ladungssicherung kommen kann.

Diese Probleme mit der Ladungssicherung von Gefahrgutbehältern durch Verzurrung haben auch zur Folge, daß die Belastbarkeit der Ladungssicherung rechnerisch praktisch nicht vorhersagbar sind, so daß für jeden Beladungsplan von Gefahrgutbehältern mit bestimmten Gewichten und bestimmten Verzurrungsplänen erneut experimentell Auflaufversuche unter Realbedingungen unternommen werden, um nachzuweisen, daß die Container und die Ladungssicherung den obengenannten Beschleunigungswerten standhalten. Dies ist sehr aufwendig, da grundsätzlich für jeden Beladungsplan mehrere Auflaufversuche durchgeführt werden müssen.

Es ist Aufgabe der vorliegenden Erfindung, eine Transportvorrichtung für Gefahrgutbehälter zu schaffen, in der sich diese in zuverlässiger Weise und in auch bei Erschütterungen und Vibrationen stabiler Weise sichern lassen, sowie ein Verfahren zur Ladungssicherung von Gefahrgutbehältern in ISO-Containern anzugeben.

Zur Lösung dieser Aufgabe dienen die Transportvorrichtung der eingangs genannten Art mit den kennzeichnenden Merkmalen des Patentanspruchs 1 sowie das Verfahren mit den Merkmalen des Patentanspruchs 11. Vorteilhafte Ausgestaltungsformen der Erfindung sind in den Unteransprüchen aufgeführt.

Erfindungsgemäß weist die Transportvorrichtung eine erste Aufnahmeflache aus einer Mehrzahl von separaten, gegeneinander bewegbaren ersten Formteilen auf, die die Bodenfläche des Containers ausfüllt und sich mithin an den Seitenwänden des Containers abstützt. Die ersten Formteile weisen Öffnungen auf, die an die Grundfläche der zu transportierenden Gefahrgutbehälter angepaßt sind und zur paßgenauen Aufnahme jeweils eines unteren Bereiches eines Gefahrgutbehälters dienen. Weiterhin ist die zweite Aufnahmefläche aus einer Mehrzahl von separaten, gegeneinander bewegbaren zweiten Formteilen gebildet, welche entsprechende Öffnungen haben, um jeweils paßgenau auf einen oberen Bereich eines Gefahrgutbehälters aufgesetzt zu werden. Dabei sind die zweiten Formteile so gestaltet, daß sie aufgesetzt auf die in der ersten Aufnahmefläche aufgestellten Gefahrgutbehälter in Anlage aneinander die zweite Aufnahmefläche bilden, welche eine zur Bodenfläche parallele Zwischenfläche des Containers vollständig ausfüllt und sich am Rand an der Containerwand abstützt. Ferner sind Ausnehmungen an den Rändern der ersten und zweiten Formteile vorgesehen, die Vertiefungen in der ersten und der zweiten Aufnahmefläche zwischen aneinandergrenzenden Formteilen bilden, in welche Keile einsetzbar sind. Durch Einsetzen von Keilen wird sichergestellt, daß bei transportbedingten Erschütterungen oder Verzerrungen der Vorrichtung und die dadurch bedingte Relativbewegung der Formteile untereinander die Keile durch Wirkung ihres Gewichts weiter in die Vertiefungen einsinken, wodurch die Aufnahmeflächen weiter gesichert und gegen die Containerwände angedrückt werden. Dadurch wird eine Selbststabilisierung der Ladungssicherung erreicht.

Durch die erfindungsgemäßen Maßnahmen wird eine Transportvorrichtung für Gefahrgutbehälter geschaffen, die zuverlässig auch bei transportbedingten Vibrationen und Erschütterungen sicher anliegt. Ferner nehmen die ersten und zweiten Aufnahmeflächen, die die Gefahrgutbehälter oben und unten einfassen, die bei Beschleunigungen der Transportvorrichtung auftretenden Trägheitskräfte der Gefahrgutbehälter in gut definierbarer Weise auf und geben sie an die Containerwände weiter.

Ein besonderer Vorteil der erfindungsgemäßen Maßnahmen liegt darin, daß durch die Einfassung der Gefahrgutbehälter in den Aufnahmeflächen die bei Beschleunigungen der Vorrichtung durch die Trägheitskräfte der Gefahrgutbehälter auftretende Kräfteverteilung und Kraftableitung gut definierbar und grundsätzlich berechenbar ist. Dies gilt insbesondere für die ansonsten schwer zu beschreibenden Kräfte bei Längs- und Querrichtung des Containers. Hier können in einem einfachen Modell für einen vorgegebenen Beladungsplan die Mehrzahl der bekannten Massen der Gefahrgutbehälter betrachtet werden, die über Kompressionsfedern mit den benachbarten Gefahrgutbehältern bzw. den festen Containerwänden in Verbindung stehen, wobei die Kompressionsfedern zur Beschreibung von Bereichen der Aufnahmeflächen zwischen den jeweiligen Gefahrgutbehältern dienen. Ein solches System gekoppelter Oszillatoren ist in seinen wesentlichen Eingenschaften vorab berechenbar, so daß die für bestimmte Beladungspläne vorzunehmende Auslegung der Ladungssicherungsmittel bestimmt werden kann, ohne dabei für jeden Beladungsplan Auflaufversuche unter Realbedingungen durchführen zu müssen, um zu prüfen, ob die Vorrichtung den vorgeschriebenen Beschleunigungen standhält.

Dabei werden die Formteile vorteilhafterweise aus einem elastisch deformierbaren Material hergestellt, so daß von den Aufnahmeflächen aufgenommene Trägheitskräfte unter elastischer Deformation der Aufnahmeflächen absorbiert werden.

In einer weiter bevorzugten Ausführungsform sind die zweiten Formteile beidseitig mit Öffnungen versehen, so daß die zweite Aufnahmefläche, wenn sie auf die in der ersten Aufnahmefläche aufgestellten Gefahrgutbehälter aufgesetzt ist, oberseitig wiederum Öffnungen zur paßgenauen Aufnahme jeweils eines unteren Bereiches eines Gefahrgutbehälters aufweist, so daß auf die zweite Aufnahmefläche eine weitere Lage von Gefahrgutbehältern aufstellbar ist. Die zweite Lage von Gefahrgutbehältern kann oberseitig wiederum durch eine dritte Aufnahmefläche gesichert werden, die wie die zweite Aufnahmefläche auf die Lage von Gefahrgutbehältern aufgesetzt ist und eine zur Bodenfläche parallele Zwischerfläche des Containers vollständig ausfüllt.

Die Erfindung wird im folgenden anhand eines Ausführungsbeispiels in den Zeichnungen näher erläutert, in denen:
- Figur 1: eine Schnittansicht der Transportvorrichtung im Schnitt durch die zweite Aufnahmefläche zeigt;
- Figur 2: einen Schnitt durch die Transportvorrichtung entlang der Line A-A aus Figur 1 zeigt; und
- Figur 3: einen Schnitt durch die Transportvorrichtung entlang der Linie B-B aus Figur 1 zeigt.

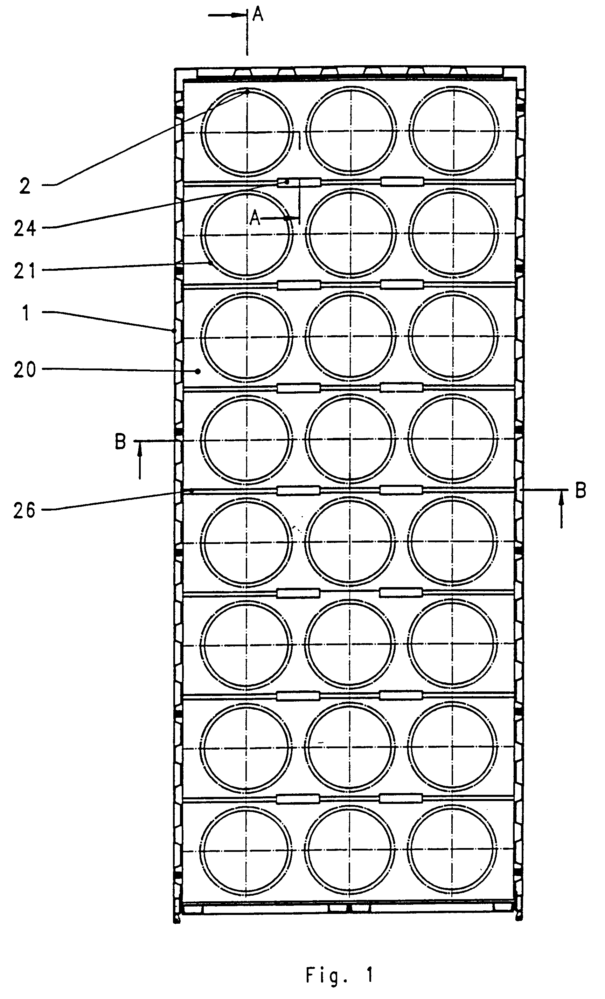

In Figur 1 ist ein 20 Fuß ISO-Spezialcontainer 1 gezeigt, in den Gefahrgutbehälter 2 in Form von 200 Liter-Fässern eingestellt sind.

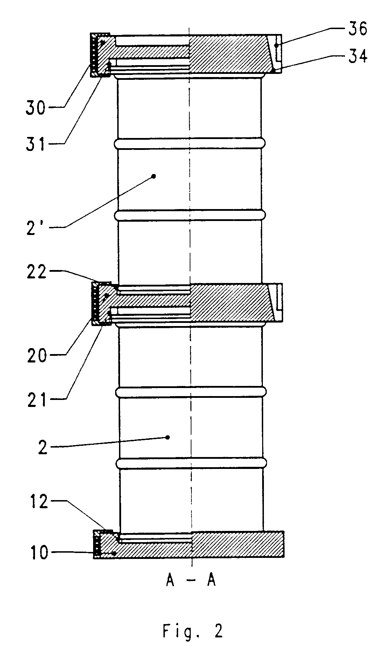

In Figur 2 ist eine seitliche Schnittdarstellung entlang der Linie A-A aus Figur 1 dargestellt. Die Bodenfläche des Containers 1 ist mit acht rechteckigen ersten Formteilen 10 in Anlage aneinander vollständig ausgelegt. Jedes Formteil 10 reicht quer zur Längsrichtung des Containers 1 von einer Seitenwand zur anderen und ist mit drei Öffnungen 12 zur paßgenauen Aufnahme jeweils eines unteren Bereiches eines Gefahrgutbehälters 2 versehen. Es ist hierbei zu bemerken, daß jeweils Formteile für bestimmte Behältertypen bereitgestellt werden müssen, nämlich für Standardbehälter wie 200 Liter und 280 Liter-Fässer. In dem gezeigten Beispiel können auf die erste Aufnahmefläche 24 Fässer aufgestellt werden.

Auf die Gefahrgutbehälter 2 sind zweite Formteile 20 aufgesetzt, die unterseitig mit Öffnungen 21 zur paßgenauen Aufnahme jeweils eines oberen Bereiches eines Gefahrgutbehälters 2 versehen sind. Die zweiten Formteile 20 haben ihre Öfffnungen 21 so angeordnet, daß sie auf die Gefahrgutbehälter 2 aufgesetzt werden können und dann in Anlage aneinander eine zur Bodenfläche des Containers 1 parallele Zwischenfläche des Containers vollständig ausfüllen.

In der bevorzugten Ausführungsform entsprechen die zweiten Formteile 20 in ihren Abmessungen den ersten Formteile 10, so daß die zweite Aufnahmefläche einen entsprechenden Aufbau wie die oben beschriebene erste Aufnahmefläche hat.

In den Rändern der zweiten Formteile 20 sind Ausnehmungen 24 vorgesehen, die zwischen aneinanderliegenden Formteilen 20 keilförmige Vertiefungen in der zweiten Aufnahmefläche bilden, in die Keile mit hohem Gewicht, wie etwa bleigefüllte Stahlblechkeile, eingesetzt werden, die beim Transport im Fall von Erschütterungen oder Schwingungen in den Aufnahmeflächen unter ihrem Gewicht weiter in die Vertiefungen 24 einsinken und so für eine Stabilisierung sorgen.

Die Formteile 20 dar zweiten Aufnahmefläche sind oberseitig wiederum mit Öffnungen 22 versehen, die wie die Öffnungen 12 in der ersten Aufnahmefläche zur paßgenauen Aufnahme jeweils eines unteren Bereichs eines Gefahrgutbehälters 2' ausgebildet sind. Dadurch ist es möglich, für einen bestimmten Stauplan vorzusehen, daß eine zweite Lage von Gefahrgutbehältern 2' auf die zweite Aufnahmefläche aufgesetzt wird. Diese zweite Lage von Gefahrgutbehältern 2' kann oberseitig durch eine dritte Aufnahmefläche gesichert werden, die aus dritten Formteilen 30 gebildet wird, die in Anlage aneinander eine zur Bodenfläche des Containers parallele Zwischenfläche vollständig ausfüllen. Die dritten Formteile 30 können den gleichen Aufbau wie die zweiten Formteile 20 haben, insbesondere mit Ausnehmungen 34 in den Rändern versehen sein, um keilförmig sich verjüngende Vertiefungen zum Einsetzen von Keilen wie oben beschrieben zu bilden.

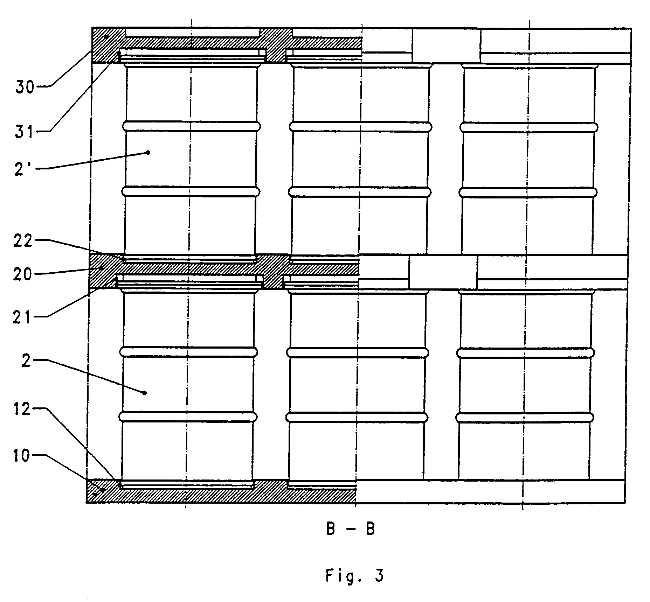

Wie in Figur 2 und 3 zu erkennen, sind die zweiten und dritten Formteile 20 und 30 oberseitig mit Vertiefungen versehen, die in der zweiten und dritten Aufnahmefläche quer zur Längsachse des Containers verlaufende Nuten 26 und 36 bilden. In diese ist jeweils eine in den Containerseitenwänden verriegelbare Haltestange einsetzbar. Die Haltestangen dienen zur Sicherung der zweiten und dritten Formteile gegen Bewegungen senkrecht zu den Aufnahmefläche.

Die ersten, zweiten und dritten Formteile 10, 20 und 30 sind, außerhalb des Bereichs der Öffnungen, vorzugsweise als Platten mit konstanter Dicke ausgebildet. Die Formteile sind vorzugsweise nach ihren Abmessungen und dem Elastizitätsmodul des Materials so ausgeslegt, daß ein großer Teil der Trägheitskräfte der Gefahrgutbehälter bei Beschleunigungen elastisch aufgenommen wird. Die Formteile sind vorzugsweise aus einem Elastomermaterial hergestellt, das es bei einer typischen Dicke der Formteile erlaubt, daß die auftretenden Trägheitskräfte der Gefahrgutbehälter für die geforderten Beschleunigungswerte elastisch aufgenommen werden können.

Vorteilhafterweise werden Formteile für mehrere Standgefäßtypen wie etwa 200 Liter-Fässer, 280 Liter-Fesser bereitgehalten und für verschiedene Beladungspläne ausgelegt, wobei folgende typische Beispiele auftreten können:
a) 48 200-Liter-Fässer (zweilagig, je Lage 24 Fässer) mit einem Gewicht von jeweils maximal 437,5 kg; Gesamtladegewicht (inklusive Ladungssicherungsmittel): 22000 kg;
b) 24 200-Liter-Fässer (einlagig) mit einem Gewicht von jeweils 875 kg; Gesamtgewicht (inklusive Ladungssicherungsmittel): 22000 kg;
c) 42 280-Liter-Fässer (zweilagig, je Lage 21 Fässer) mit einem Gewicht von jeweils 500 kg; Gesamtgewicht (inklusive Ladungssicherungsmittel): 22.000 kg;
d) 21 280-Liter-Fässer (einlagig) mit jeweils einem Gewicht von 1000 kg; Gesamtgewicht (inklusive Ladungssicherungsmittel): 22000 kg.

## Patentansprüche

1. Transportvorrichtung für Gefahrgutbehälter, mit einem die Gefahrgutbehälter aufnehmenden ISO-Container und Mitteln zur Ladungssicherung der Gefahrgutbehälter innerhalb des Containers, **dadurch gekennzeichnet**, daß die Mittel zur Ladungssicherung eine die Bodenfläche des Containers (1) vollständig ausfüllende erste Aufnahmefläche mit Öffnungen (12) zur paßgenauen Aufnahme jeweils eines unteren Bereiches eines Gefahrgutbehälters (2) und eine eine zur Bodenfläche parallele Zwischenfläche des Containers vollständig ausfüllende zweite Aufnahmefläche aufweisen, die Öffnungen zur paßgenauen Aufnahme jeweils eines oberen Bereiches von Gefahrgutbehältern (2) hat, die in die erste Aufnahmefläche eingestellt sind,
wobei die erste Aufnahmefläche durch eine Mehrzahl von separaten, gegeneinander bewegbaren ersten Formteilen (10), welche in Anlage aneinander sind und sich am Rand der ersten Aufnahmefläche an der Containerwand abstützen, gebildet ist,
die zweite Aufnahmefläche durch eine Mehrzahl von separaten, gegeneinander bewegbaren zweiten Formteilen (20), welche in Anlage aneinander sind und sich am Rand der zweiten Aufnahmefläche an der Containerwand abstützen, gebildet ist,
wobei die ersten und zweiten Formteile (10, 20) jeweils Ausnehmungen (24) an ihren Rändern aufweisen, durch die in der ersten und zweiten Aufnahmefläche nach oben offene Vertiefungen zwischen aneinandergrenzenden Formteilen (10, 20) gebildet werden, in die Keile einsetzbar sind.

2. Transportvorrichtung nach Anspruch 1, **dadurch gekennzeichnet**, daß die zweiten Formteile (20) oberseitig Vertiefungen aufweisen, die in der zweiten Aufnahmefläche im wesentlichen quer zur Längsachse des Containers verlaufende Nuten (26) bilden, in die in der Containerwand verriegelbare Haltestangen einsetzbar sind.

3. Transportvorrichtung nach einem der vorhergehenden Ansprüche, **dadurch gekennzeichnet**, daß die ersten und zweiten Formteile (10, 20) jeweils eine im wesentlichen rechteckige Grundfläche von einer solchen Abmessung haben, daß jedes Formteil (10, 20) im Container quer zu dessen Längsrichtung von einer Seitenwand zur anderen reicht.

4. Transportvorrichtung nach einem der vorhergehenden Ansprüche, **dadurch gekennzeichnet**, daß die zweiten Formteile (20) beidseitig mit Öffnungen (21, 22) derart versehen sind, daß die zweite Aufnahmefläche oberseitig Öffnungen (22) zur paßgenauen Aufnahme jeweils eines unteren Bereichs eines Gefahrgutbehälters (2') aufweist.

5. Transportvorrichtung nach Anspruch 4, **dadurch gekennzeichnet**, daß die Mittel zur Ladungssicherung eine Mehrzahl von dritten Formteilen (30) aufweisen, welche Öffnungen (31) zur paßgenauen Aufnahme jeweils eines oberen Bereiches eines Gefahrgutbehälters (2') haben und so gestaltet sind, daß sie aufgesetzt auf die in der zweiten Aufnahmefläche aufgestellten Gefahrgutbehälter (2') eine dritte Aufnahmefläche bilden, welche eine zur Bodenfläche parallele Zwischenfläche des Containers vollständig ausfüllt.

6. Transportvorrichtung nach Anspruch 5, **dadurch gekennzeichnet**, daß die dritten Formteile (30) Ausnehmungen (34) an ihren Rändern aufweisen, durch die in der dritten Aufnahmefläche nach oben offene Vertiefungen zwischen aneinandergrenzenden Formteilen (30) gebildet werden, in die Keile einsetzbar sind.

7. Transportvorrichtung nach Anspruch 5 oder 6, **dadurch gekennzeichnet**, daß die dritten Formteile (30) oberseitig Vertiefungen aufweisen, die in der dritten Aufnahmefläche im wesentlichen quer zur Längsachse des Containers verlaufende Nuten (36) bilden, in die in der Containerwand verriegelbare Haltestangen einsetzbar sind.

8. Transportvorrichtung nach einem der Ansprüche 5 bis 7, **dadurch gekennzeichnet**, daß zwischen der dritten Aufnahmefläche und der Deckenwand des Containers Stützteile mit einstellbarer Höhe die dritte Aufnahmefläche gegen die Deckenfläche abstützen.

9. Transportvorrichtung nach einem der vorhergehenden Ansprüche, **dadurch gekennzeichnet**, daß die ersten, zweiten und dritten Formteile (10, 20, 30) aus einem Elastomermaterial bestehen.

10. Transportvorrichtung nach einem der vorhergehenden Ansprüche, **dadurch gekennzeichnet**, daß die ersten, zweiten und dritten Formteile (10, 20, 30) Platten mit, außerhalb der Öffnungen (12, 21, 22, 31) konstanter und untereinander einheitlicher Dicke sind.

11. Verfahren zur Ladungssicherung von Gefahrgutbehältern in ISO-Containern zum Transport, mittels Mitteln zur Ladungssicherung **dadurch gekennzeichnet**, daß durch die Mittel zur Ladungssicherung die Bodenfläche des Containers (1) vollständig mit einer ersten Aufnahmefläche mit Öffnungen (12) zur paßgenauen Aufnahme jeweils eines unteren Bereiches eines Gefahrgutbehälters (2) ausgefüllt wird, die Gefahrgutbehälter (2) in die Öffnungen (12) eingestellt werden und eine zur Bodenfläche parallele Zwischenfläche des Containers mit einer zweiten Aufnahmefläche vollständig aufgefüllt wird, welche Öffnungen jeweils einen oberen Bereich der in die erste Aufnahmefläche eingestellten Gefahrgutbehälter (2) paßgenau aufnehmen,
wobei die erste Aufnahmefläche durch Auslegen einer Mehrzahl von separaten, gegeneinander bewegbaren ersten Formteilen (10) in Anlage aneinander gebildet wird, die sich am Rand der ersten Aufnahmefläche an der Containerwand abstützen, daß die zweite Aufnahmefläche durch eine Mehrzahl von zweiten Formteilen (20) mit ihren Öffnungen (21) auf die Gefahrgutbehälter (2) aufgesetzt gebildet wird, wobei die zweiten Formteile (20) so gestaltet sind, daß sie in Anlage aneinander eine zur Bodenfläche parallele Zwischenfläche des Containers vollständig ausfüllen und sich am Rand der Zwischenfläche an der Containerwand abstützen, und daß Keile mit hohem Gewicht in Vertiefungen der ersten und/oder zweiten Aufnahmefläche eingesetzt werden, welche Vertiefungen durch Ausnehmungen (24) in den Rändern aneinandergrenzender Formteile (10, 20) gebildet sind.

12. Verfahren nach Anspruch 11, **dadurch gekennzeichnet**, daß Haltestangen im wesentlichen quer zur Längsrichtung des Containers in dafür vorgesehene Nuten (26) in der Oberseite der zweiten Aufnahmefläche eingesetzt und in den Seitenwänden des Containers verriegelt werden.

13. Verfahren nach einem der Ansprüche 11 oder 12, **dadurch gekennzeichnet**, daß erste und zweite Formteile (10, 20) mit im wesentlichen rechteckiger Grundfläche mit solcher Abmessung verwendet werden, daß sie im Container quer zu dessen Längsrichtung von einer Seitenwand zur anderen reichen.

14. Verfahren nach einem der Ansprüche 11 bis 13, **dadurch gekennzeichnet**, daß zweite Formteile (20) verwendet werden, die beidseitig mit Öffnungen (21, 22) derart versehen sind, daß die zweite Aufnahmefläche oberseitig Öffnungen (22) zur paßgenauen Aufnahme jeweils eines unteren Bereiches eines Gefahrgutbehälters (2') aufweist, daß Gefahrgutbehälter (2') in die Öffnungen (22) der zweiten Aufnahmefläche eingesetzt und daß eine Mehrzahl von dritten Formteilen (30), welche Öffnungen (31) zur paßgenauen Aufnahme jeweils eines oberen Bereiches eines Gefahrgutbehälters (2') ausweisen, so auf die Gefahrgutbehälter (2') der zweiten Aufnahmefläche aufgesetzt werden, daß sie in Anlage aneinander eine dritte Aufnahmefläche bilden, welche eine zur Bodenfläche parallele Zwischenfläche des Containers vollständig ausfüllt.

## Claims

1. Transport device for hazardous goods receptacles, with an ISO container receiving the hazardous goods receptacles and means for securing the loads of the hazardous goods receptacles within the container, characterized in that the load-securing means comprises: a first receiving surface completely filling the bottom surface of the container (1) with openings (12) each for receiving with a precise fit a lower region of a hazardous goods receptacle (2), and a second receiving surface which completely fills an intermediate surface, parallel to the bottom surface, of the container and which has openings each for receiving with a precise fit an upper region of a hazardous goods receptacle (2) fitted onto the first receiving surface,
wherein the first receiving surface is formed by a plurality of separate first preshaped parts (10) which are movable one against the other and which abut one against the other and, at the edges of the first receiving surface, are supported by the container walls,
the second receiving surface is formed by a plurality of separate second preshaped parts (20) which are movable one against the other and which abut one against the other and, at the edges of the second receiving surface, are supported by the container walls
wherein the first and second preshaped parts (10, 20) have recesses (24) at their edges by which cavities open to the top are formed into which wedges can be inserted between adjoining preshaped parts (10, 20).

2. Transport device according claim 1, characterized in that on the upper side the second preshaped parts (20) have indentations which form grooves (26), running essentially transversely to the longitudinal axis of the container in the second receiving surface, into which holding rods lockable in the container wall can be inserted.

3. Transport device according to any preceding claim, characterized in that the first and second preshaped parts (10, 20) each have an essentially rectangular surface area of a size such that every preshaped part (10, 20) extends in the container transversely to its longitudinal direction from one side wall to the other.

4. Transport device according to any preceding claim, characterized in that the second preshaped parts (20) are provided on both sides with openings (21, 22) in such a way that on the upper side the second receiving surface has openings (22) each for receiving with a precise fit a lower region of a hazardous goods receptacle (2').

5. Transport device according to Claim 4, characterized in that the load-securing means have a plurality of third preshaped parts (30) which have openings (31) each for receiving with a precise fit an upper region of a hazardous goods receptacle (2') and are so designed that, placed onto the hazardous goods receptacles (2') fitted in the second receiving surface, they form a third receiving surface which completely fills an intermediate surface, parallel to the bottom surface, of the container.

6. Transport device according to Claim 5, characterized in that at their edges the third preshaped parts (30) have recesses (34) by which cavities open to the top into which wedges can be inserted are formed between adjoining preshaped parts (30) in the third receiving surface.

7. Transport device according to Claim 6 or 6, characterized in that on the upper side the third preshaped parts (30) have indentations which form grooves (36), running essentially transversely to the longitudinal axis of the container in the third receiving surface, into which holding rods lockable in the container wall can be inserted.

8. Transport device according to one of claims 7 to 9, characterized in that, between the third receiving surface and the cover wall of the container, supporting parts with an adjustable height support the third receiving surface against the cover surface.

9. Transport device according to one of the previous claims, characterized in that the first, second and third preshaped parts (10, 20, 30) consist of an elastomer material.

10. Transport device according to one of the previous Claims, characterized in that the first, second and third preshaped parts (10, 20, 30) are sheets with, outside the openings (12, 21, 22, 31), a thickness that is constant and uniform between one another.

11. Method of securing the loads of hazardous goods receptacles in ISO containers for transport by means of a load securing means characterized in that the bottom surface of the container (1) is completely filled by the load securing means with a first receiving surface with openings (12) each for receiving with a precise fit a lower region of a hazardous goods receptacle (2), the hazardous goods receptacles (2) are fitted into the openings (12), and an intermediate surface, parallel to the bottom surface, of the container is completely filled with a second receiving surface which has openings (21) each for receiving with a precise fit an upper region of a hazardous goods receptacle (2) fitted onto the first receiving surface,
wherein the first receiving surface is filled by placing a plurality of first separate preshaped parts (10) so that they are abutting and movable one against the other, and, at the edges of the first receiving surface, are supported by the container walls, that the second receiving surface is formed by a plurality of second separate preshaped parts (20) with its openings fitted onto the hazardous goods receptacles (2), wherein the second preshaped parts are formed such that they, abutting one against the other, completely fill an intermediate surface, parallel to the bottom surface, of the container and are supported at the edges of the second receiving surface by the container walls, and that wedges with a high weight are inserted into cavities of the first and/or second receiving surface, which cavities are formed by recesses (24) in the edges of adjoining preshaped parts (10, 20).

12. Method according to Claim 11, characterized in that holding rods are inserted essentially transversely to the longitudinal direction of the container into grooves (26) provided for them in the upper side of the second receiving surface and are locked in the side walls of the container.

13. Method according to one of Claims 11 or 12, characterized in that first and second preshaped parts (10, 20) with an essentially rectangular surface area with such a size are used that they extend in the container transversely to its longitudinal direction from one side wall to the other.

14. Method according to one of claims 11 to 13, characterized in that second preshaped parts (20) are used which are provided on both sides with openings (21, 22) in such a way that on the upper side the second receiving surface has openings (22) each for receiving with a precise fit a lower region of a hazardous goods receptacle (2'), in that hazardous goods receptacles (2') are inserted into the openings (22) of the second receiving surface and in that a plurality of third preshaped parts (30) which have openings (31) each for receiving with a precise fit an upper region of a hazardous goods receptacle (2') are fitted onto the hazardous goods receptacles (2') of the second receiving surface in such a way that, abutting one against the other, they form a third receiving surface which completely fills an intermediate surface, parallel to the bottom surface, of the container.

## Revendications

1. Dispositif de transport pour récipients contenant des matières dangereuses, avec un conteneur ISO qui reçoit les récipients de matières dangereuses, et des moyens pour bloquer le chargement des récipients de matières dangereuses, caractérisé en ce que les moyens de blocage du chargement comprennent une première surface réceptrice remplissant complètement la surface du fond du conteneur (1) et pourvue d'ouvertures pour recevoir de manière précise, respectivement, une zone inférieure d'un récipient de matières dangereuses (2), et une deuxième surface réceptrice remplissant complètement une surface intermédiaire du conteneur parallèle à la surface du fond et qui a des ouvertures pour recevoir de manière précise, respectivement, une zone supérieure des récipients de matières dangereuses (2), qui sont insérés dans la première surface réceptrice,
dispositif dans lequel la première surface réceptrice est formée de premières pièces moulées séparées (10) déplaçables l'une par rapport à l'autre, qui sont appuyées l'une sur l'autre et s'appuient, au bord de la première surface réceptrice, sur la paroi du conteneur,
la deuxième surface réceptrice est formée de deuxièmes pièces moulées séparées (20) déplaçables l'une par rapport à l'autre, qui s'appuient l'une sur l'autre et s'appuient, au bord de la deuxième surface réceptrice, sur la paroi du conteneur,
les premières et les deuxièmes pièces moulées (10, 20) présentant, respectivement, sur leurs bords, des évidements (24) qui forment, dans la première et la deuxième surfaces réceptrices, entre des pièces moulées limitrophes (10, 20), des cavités tournées vers le haut, dans lesquelles sont insérées des cales.

2. Dispositif de transport selon la revendication 1, caractérisé en ce que les deuxièmes pièces moulées (20) présentent dans leur partie supérieure des cavités qui forment dans la deuxième surface réceptrice des gorges (26) s'étendant sensiblement transversalement à l'axe longitudinal du conteneur, dans lesquelles peuvent être insérés des rails de retenue verrouillables dans la paroi du conteneur.

3. Dispositif de transport selon l'une quelconque des revendications précédentes, caractérisé en ce que les premières et deuxièmes pièces moulées (10, 20) ont respectivement une surface de base sensiblement rectangulaire d'un dimensionnement tel que chaque pièce moulée (10, 20) s'étende dans le conteneur transversalement à sa direction longitudinale d'une paroi latérale à l'autre.

4. Dispositif de transport selon l'une quelconque des revendications précédentes, caractérisé en ce que les deuxièmes pièces moulées (20) sont pourvues des deux côtés d'ouvertures (21, 22) telles que la deuxième surface réceptrice présente, sur sa partie supérieure, des ouvertures (22) pour recevoir de manière précise, respectivement, une zone inférieure d'un récipient de matières dangereuses (2').

5. Dispositif de transport selon la revendication 4, caractérisé en ce que les moyens de blocage du chargement présentent une série de troisièmes pièces moulées (30) qui ont des ouvertures (31) pour recevoir avec précision, respectivement, une zone supérieure d'un récipient de matières dangereuses (2') et sont conformées de telle sorte qu'une fois déposées sur les récipients de matières dangereuses (2') déposés sur la deuxième couche réceptrice, elles forment une troisième surface réceptrice qui remplit complètement une surface intermédiaire du conteneur parallèle à la surface du fond.

6. Dispositif de transport selon la revendication 5, caractérisé en ce que les troisièmes pièces moulées (30) présentent sur leurs bords des évidements (34) qui forment dans la troisième surface réceptrice, entre des pièces moulées limitrophes (30), des cavités ouvertes vers le haut dans lesquelles sont insérées des cales.

7. Dispositif de transport selon la revendication 5 ou 6, caractérisé en ce que les troisièmes pièces moulées (30) présentent sur leur partie supérieure des cavités qui forment dans la troisième surface réceptrice des gorges (36) s'étendant sensiblement transversalement à l'axe longitudinal du conteneur, dans lesquelles sont insérés des rails de retenue verrouillables dans la paroi du conteneur.

8. Dispositif de transport selon l'une quelconque des revendications 5 à 7, caractérisé en ce qu'entre la troisième surface réceptrice et la paroi du couvercle du conteneur, des pièces de soutien de hauteur réglable assurent l'appui de la troisième surface réceptrice contre la surface du couvercle.

9. Dispositif de transport selon l'une quelconque des revendications précédentes, caractérisé en ce que les premières, les deuxièmes et les troisièmes pièces moulées (10, 20, 30) sont constituées d'une matière élastomère.

10. Dispositif de transport selon l'une quelconque des revendications précédentes, caractérisé en ce que les premières, les deuxièmes et les troisièmes pièces moulées (10, 20, 30) sont des plaques d'épaisseur constante en dehors des ouvertures (12, 21, 22, 31) et mutuellement unitaire.

11. Procédé de blocage d'un chargement de récipients de matières dangereuses dans des conteneurs ISO pour le transport, par des moyens de blocage du chargement, caractérisé en ce que les moyens de blocage du chargement sont tels que la surface du fond du conteneur (1) est complètement remplie par une première surface réceptrice pourvue d'ouvertures (12) pour recevoir de manière précise, respectivement, une zone inférieure d'un récipient de matières dangereuses (2), les récipients de matières dangereuses (2) sont insérés dans les ouvertures (12) et une surface intermédiaire du conteneur parallèle à la surface du fond est remplie complètement par une deuxième surface réceptrice, lesdites ouvertures recevant, respectivement, de manière précise une zone supérieure des récipients de matières dangereuses (2) insérés dans la première surface réceptrice, procédé dans lequel la première surface réceptrice est formée par dimensionnement d'une série de premières pièces moulées séparées (10) déplaçables l'une par rapport à l'autre, qui s'appuient, au bord de la première surface réceptrice, sur la paroi du conteneur, la deuxième surface réceptrice est formée par une série de deuxièmes pièces moulées (20) déposées avec leurs ouvertures sur les récipients de matières dangereuses (2), les deuxièmes pièces moulées (20) étant conformées de manière qu'une fois appuyées l'une sur l'autre, elles remplissent une surface intermédiaire du conteneur parallèle à la surface du fond et s'appuient, au bord de la surface intermédiaire, sur la paroi du conteneur, et des cales de poids élevé sont insérées dans des cavités de la première et/ou de la deuxième surfaces réceptrices, lesdites cavités étant formées par des évidements (24) ménagés dans les bords de pièces moulées limitrophes (10, 20).

12. Procédé selon la revendication 11, caractérisé en ce que des rails de retenue sont insérés, transversalement à la direction longitudinale du conteneur, dans des gorges (26) prévues à cet effet dans la partie supérieure de la deuxième surface réceptrice et sont verrouillés dans les parois latérales du conteneur.

13. Procédé selon l'une quelconque des revendications 11 et 12, caractérisé en ce qu'on utilise les premières et les deuxièmes pièces moulées (10, 20) de surface de base sensiblement rectangulaire avec un dimensionnement tel qu'elles s'étendent dans le conteneur, transversalement à sa direction longitudinale, d'une paroi latérale à l'autre.

14. Procédé selon l'une quelconque des revendications 11 à 13, caractérisé en ce qu'on utilise une série de deuxièmes pièces moulées (20) qui sont pourvues des deux côtés d'ouvertures (21, 22) de sorte que la deuxième surface réceptrice présente, sur sa partie supérieure, des ouvertures (22) pour recevoir de manière précise, respectivement, une zone inférieure d'un récipient de matières dangereuses (2'), en ce que les récipients de matières dangereuses (2') sont insérés dans les ouvertures (22) de la deuxième surface réceptrice et en ce qu'une série de troisièmes pièces moulées (30) présentent des ouvertures (31) pour recevoir de manière précise, respectivement, une zone supérieure d'un récipient de matières dangereuses (2'), de sorte que les récipients de matières dangereuses (2') soient déposés sur la deuxième surface réceptrice de manière qu'une fois appuyés l'un sur l'autre, ils forment une troisième surface réceptrice qui remplit complètement une surface intermédiaire du conteneur parallèle à la surface du fond.
